# EUROPEAN PATENT SPECIFICATION

(11) **EP 2 390 122 B1**
(45) Veröffentlichungstag und Bekanntmachung des Hinweises auf die Patenterteilung: **27.03.2013**
(21) Anmeldenummer: 10290275.6
(22) Anmeldetag: 25.05.2010
(51) Int. Cl.: B60H 1/00

(54) **Luftverteilvorrichtung mit schwenkbarem Absperrorgan**
Air distributing device with pivoting closing means
Diffuseur d'air avec clapet de fermeture pivotant

(43) Veröffentlichungstag der Anmeldung: 30.11.2011
(73) Patentinhaber: Behr France Rouffach SAS, 68250 Rouffach (FR)
(72) Erfinder: Tonnelier, Pierre, 68240 Kaysersberg (FR)
(74) Vertreter: Grauel, Andreas

(56) Entgegenhaltungen:
- EP-A1- 0 551 754
- DE-A1- 3 805 168
- DE-A1- 4 447 135

## Beschreibung

Die vorliegende Erfindung betrifft das Gebiet automobiler Klimatisierung, insbesondere betrifft die Erfindung eine Luftverteilvorrichtung geeignet zur Luftverteilung in einem Fahrzeuginnenraum, sowie ein Fahrzeug, dass mit einer solchen Luftvertellvorrichtung ausgestattet ist.

Bei aktuellen Serienfahrzeugen enthält das Heizungs- und Klimatisierungssystem zwei oder mehr Absperrorgane, meist in Form von Klappen, die den von der Klimaanlage erwärmten oder gekühlten Luftstrom entweder zu dem Enteiserauslass (Drefrostauslass) über dem Armaturenbrett oder zu einem Auslass zur lnnenraumbelüftung leiten, der entweder ebenfalls über dem Armaturenbrett, in diesem integriert oder im Bereich der Mittelkonsole angeordnet sein kann.

Vor allem für die Klimatisierungstechnik im unteren Preissegment ist es erwünscht, durch eine geringere Anzahl von Bauteilen die Herstellungskosten zu reduzieren. Zudem ist es generell erwünscht, die Anzahl der beweglichen Teile in allen Komponenten des Fahrzeugs möglichst klein zu halten und damit später notwendige Wartungsintervalle zu verlängern oder einen Austausch von durch die Bewegung verschlissenen Komponenten zu vermeiden.

Eine bekannte Luftverteilvorrichtung ist aus dem nächstliegenden Stand der Technik, Dokument DE 44 47135 A1, bekannt.

Entsprechend ist es eine Aufgabe der Erfindung, eine Luftvertellvorrichtung vorzuschlagen, die die Luftverteilung und Absperrung der von der Klimaanlage gelieferten Luftströmung an zwei wesentlichen Klimatisierungszonen ermöglicht.

Diese Aufgabe wird gelöst durch eine Luftverteilvorrichtung gemäß Anspruch 1. Die Luftverteilvorrichtung weist ein Gehäuse mit einer Lufteintrittsöffnung, einer ersten Luftaustrittsöffnungen und einer zweiten Luftaustrittsöffnung und ein Absperrorgan, das innerhalb des Gehäuses angeordnet ist, auf. Das einzige Absperrorgan ist zwischen zwei Endpositionen um eine Schwenkachse relativ zu dem Gehäuse derart verschwenkbar, dass während einer stufenlosen Schwenkbewegung in eine erste Schwenkrichtung die folgenden fünf Schwenkpositionen eingenommen werden:
1. In der ersten Endposition ist die erste Luftaustrittsöffnung geöffnet, die zweite Luftaustrittsöffnung geschlossen und die Lufteintrittsöffnung vollständig geöffnet.
2. In einer ersten Zwischenposition ist die erste Luftaustrittsöffnung geöffnet, die zweite Luftaustrittsöffnung geschlossen und die Lufteintrittsöffnung zur Hälfte geöffnet.
3. In einer Mittenposition ist die erste Luftaustrittsöffnung, die zweite Luftaustrittsöffnung und die Lufteintrittsöffnung geschlossen.
4. In einer zweiten Zwischenposition ist die erste Luftaustrittsöffnung geschlossen, die zweite Luftaustrittsöffnung geöffnet und die Lufteintrittsöffnung zur Hälfte geöffnet.
5. In der zweiten Endposition ist die erste Luftaustrittsöffnung geschlossen, die zweite Luftaustrittsöffnung geöffnet und die Lufteintrittsöffnung vollständig geöffnet.

Die vorgeschlagene Lösung erlaubt die Luftverteilung mit nur einem einzigen schwenkbaren Absperrorgan, wobei bekannte Prinzipien der Luftverteilung unverändert und ohne negative Auswirkungen hinsichtlich der Akustik oder Aerodynamik verwendet werden können. Die Luftverteilung mittels eines einzigen Absperrorgans ist ferner kostengünstiger als bekannte Luftverteilungsvorrichtungen, die zwei oder mehr Absperrorgane verwenden. Es versteht sich, dass das Gehäuse nicht notwendig eine Zusatzkomponente ist, sondern auch schon im Fahrzeug vorhandene Wandungen und andere Luftleitelemente durchaus geeignet sein können, ein Teil des Gehäuses und insbesondere die Lufteintritts- bzw. Luftaustrittsöffnungen zu bilden und/oder das Absperrorgan in sich aufzunehmen und schwenkbar zu haltern.

Gemäß einem Ausführungsbeispiel sind die Luftaustrittsöffnungen mit ihren Querschnittsflächen in einer Längsachse gestreckt und parallel zu der Schwenkachse orientiert. Insbesondere besteht eine Fortbildung darin, dass die Luftverteilvorrichtung derartige Abmessungen aufweist, dass sie sich unterhalb eines Enteisungsluft-Auslassgitters und eines Belüftungsauslassgitters anordnen lässt und mit ihrer Längsachse parallel zu der Fahrzeugquerrichtung (Y-Richtung), also quer zur Fahrtrichtung orientiert ist. Bevorzugt ist ferner, dass die erste Luftaustrittsöffnung mit ihrer Querschnittsfläche an die Querschnittsfläche des Enteisungsluft-Auslassgitters und die zweite Luftaustrittsöffnung mit ihrer Querschnittsfläche an die Querschnittsfläche des Enteisungsluft-Auslassgitters angepasst ist, um einen Druckverlust bei Durchtritt des Massenstroms von den Luftaustrittsöffnungen über Kanäle zu den Auslassgittem zu vermeiden.

In einer weitem Ausführung wird bevorzugt, dass das Absperrorgan einen Stirnabschnitt mit einer konvexe Stirnfläche aufweist, die parallel zu der Schwenkachse angeordnet ist. Die konvexe Oberfläche kann dabei auch kreisbogenförmig und mit einem Radius von die Schwenkachse beabstandet sein. Das Absperrorgans folgt bei einer Schwenkbewegung um die Schwenkachse einem Kreisbogen. Durch die konvexe Oberfläche lässt sich leicht eine Absperrung erreichen, indem etwa eine Innenkante der Innenwandung in jeder Verschwenkungsposition zwischen den Endpositionen mit der Stirnfläche des Absperrorgans in flächigem Kontakt ist oder die Innenwandung einen Bund aufweist, der mit einer Oberseite an die Fläche der Stirnseite des Absperrorgans bündig angepasst, also konkav ist und in jeder Verschwenkungsposition zwischen den Endpositionen mit der Stirnfläche des Absperrorgans in flächigem Kontakt steht.

Bevorzugt ist in einem weiteren Aspekt, dass sich zwischen dem Stirnabschnitt und der Schwenkachse des Absperrorgans zwei Luftleitabschnitte mit ebenen oder konkaven Seitenflächen erstrecken, um in jeder Endpositionen mit der Innenwandung eines lufteinlassseitigen sich verjüngenden Gehäuseabschnittes eine ebene oder konkave Luftleitfläche mit einem der Luftleitabschnitte des Absperrorgans auszubilden.

In einem weiteren Aspekt ist vorgesehen, dass die Ebenen der Seitenflächen einen Winkel von 45 bis 135 Grad, bevorzugt von 90 Grad um die Schwenkachse aufspannen. Ferner kann die Absperrvorrichtung vorzugsweise um einen Winkel von 90 bis 270 Grad, weiter bevorzugt, von 180 Grad um die Schwenkachse verschwenkbar sein.

Für eine besonders günstige Herstellung der Luftverteilvorrichtung wird ferner vorgeschlagen, dass das Gehäuse und/ oder des Absperrorgan wenigstens zu einem Teil aus thermoplastischem, insbesondere elastomeren Material stranggepresst ist. Insbesondere der vorgenannte, sich nach innen verjüngende Abschnitt des Gehäuses kann aus elastomerem Material bestehen und damit bündig und mit einer gewissen Kraft auf der Stirnseite des Absperrorgans aufliegen und damit einen Luftdurchtritt an dieser Stelle wirksam vermeiden.

In einem weiteren Ausführungsbeispiel ist das Absperrorgan mittels eines Motors, eines Stellgliedes oder eines Hebels verschwenkbar.

Die oben genannten einzelnen Merkmale der Erfindung und der Ausführungsbeispiele können selbstverständlich auch untereinander kombiniert werden, wodurch sich zum Teil auch vorteilhaft Wirkungen einstellen können, die über die Summe der Einzelwirkungen hinausgehen.

Weitere Einzelheiten und Vorteile der Erfindung werden anhand der in den Zeichnungen dargestellten Ausführungsbeispiele deutlich. Es zeigt
Fig. 1 A bis Fig. 1 F in schematischen Schnittansichten A bis F verschiedene Wirkelpositionen I-IV eines Absperrorgans innerhalb eines Gehäuses;
Fig. 2 zwei Diagramme, die den Luftdurchlass für die in Fig. 1 gezeigte Luftverteilvorrichtung in verschiedenen Schwenkpositionen veranschaulichen;
Fig. 3 weitere zwei Diagramme, die den Luftdurchlass für eine andere Luftverteilvorrichtung in verschiedenen Positionen veranschaulichen;
Fig. 4 eine schematische Schnittansicht einer Luftverteilvorrichtung wie in Fig. 1 B, jedoch mit modifiziertem Gehäuse.

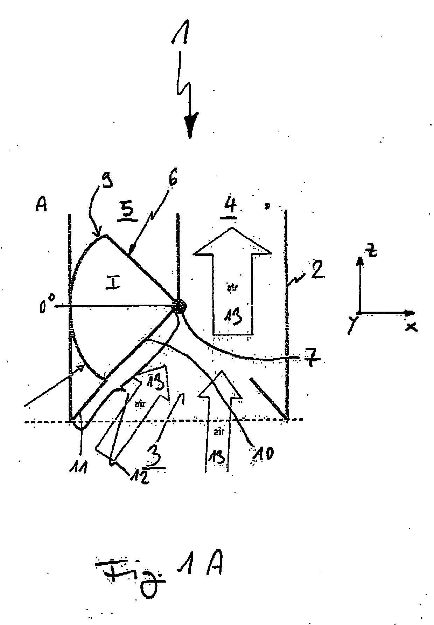

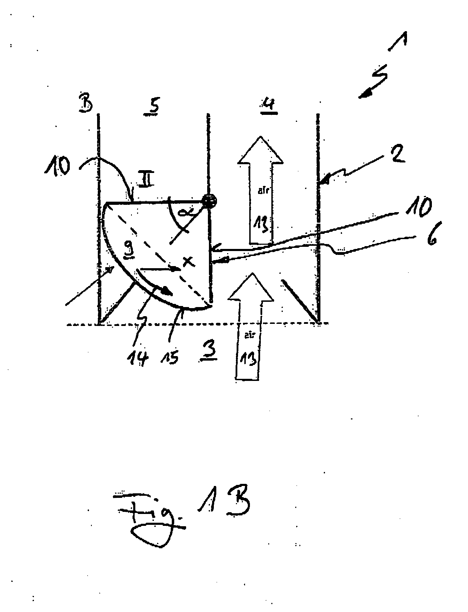

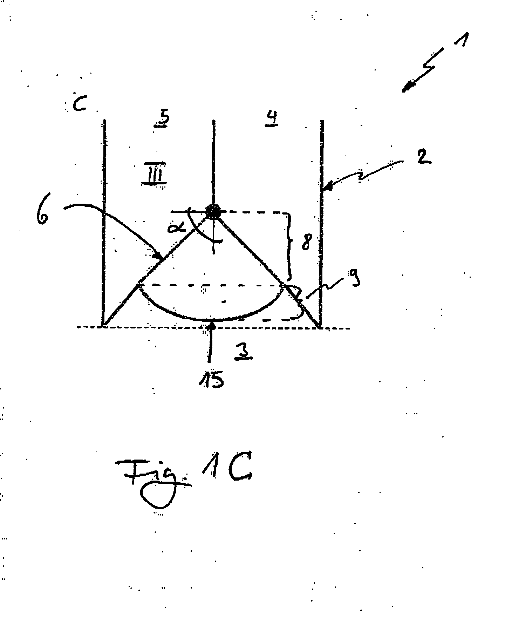

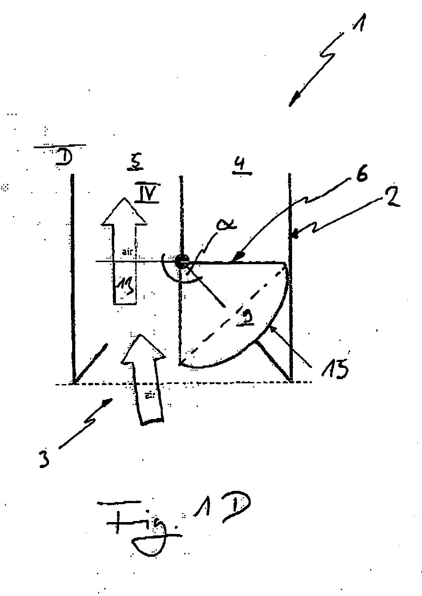

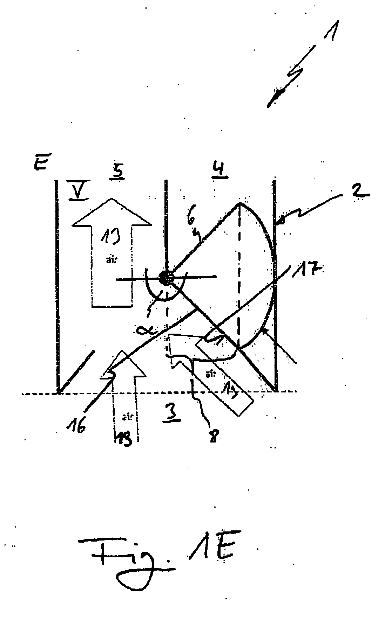

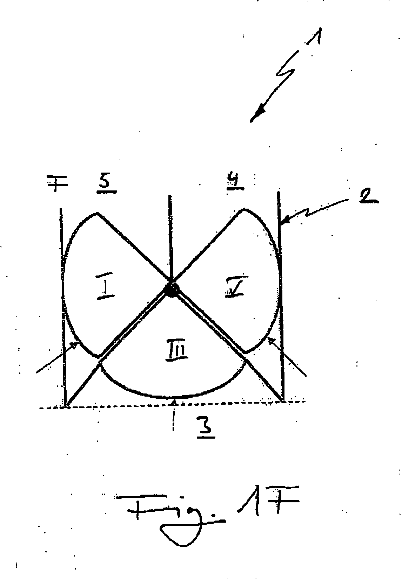

Figur 1 zeigt in den Ansichten A bis F jeweils eine Luftvertellvorrichtung 1 geeignet zur Luftverteilung in einem Fahrzeuginnenraum, aufweisend ein Gehäuse 2 mit einer Lufteintrittsöffnung 3, einer ersten Luftaustrittsöffnungen 4 und einer zweiten Luftaustrittsöffnung 5 und ein einziges Absperrorgan 6 das innerhalb des Gehäuses 2 angeordnet ist.

Das Absperrorgan 6 ist zwischen zwei in den Ansichten A und E gezeigten Endpositionen I, V um eine Schwenkachse 7 relativ zu dem Gehäuse 2 derart verschwenkbar, dass in der ersten in Ansicht A gezeigten Endposition I die erste Luftaustrittsöffnung 4 geöffnet, die zweite Luftaustrittsöffnung 5 geschlossen und die Lufteintrittsöffnung 3 vollständig geöffnet ist.

In Endposition I wird die gesamte durch die Lufteintrittsöffnung 3 strömende erwärmte Luftmasse 13 über die Luftaustrittsöffnung 4 und einen hier nicht gezeigten Kanal zu einem ebenfalls nicht gezeigten Enteisungsauslass, bzw, Defrost-Auslass im Bereich einer Fahrzeugfrontscheibe geleitet. Die bevorzugte Orientierung der Luftauslassvorrichtung innerhalb eines Fahrzeugs ist durch die x,y,z-Koordinaten veranschaulicht, wobei x die Fahrzeuglänge, y die Fahrzeugbreite und z die Fahrzeughöhe veranschaulicht. Eine plane Seitenfläche 10 eines Luftleitabschnitts 8 des Absperrorgans, die sich von der Schwenkachse 7 bis zu einem Stirnabschnitt 9 des Absperrorgans 6 erstreckt, wirkt in dieser Position mit einer Innenwandung 11 des Gehäuses derart zusammen, dass eine plane Luftleitfläche 12 gebildet ist. Durch die Luftleitfläche 12, insbesondere die Seitenfläche 10 des Absperrorgans 6 wird die zweite Luftaustrittsöffnung 5 geschlossen, so dass kein Luftstrom in einen weiteren Kanal gelangt, der zu einem für die Belüftungsauslassgitter führt. Da die Endposition I in der gezeigten Folge eine Anfangsposition für die Schwenkbewegung ist, wird der relative Schwenkwinkel α mit Null Grad angegeben.

Ansicht B zeigt eine erste Zwischenposition II nach einem 45 Grad-Schwenk des Absperrorgans aus der Endposition I. Die Schwenkrichtung 14 zeigt dabei in Fahrtrichtung x des Fahrzeugs. In der Zwischenposition II ist die erste Luftaustrittsöffnung 4 geöffnet, die zweite Luftaustrittsöffnung 5 geschlossen und die Lufteintrittsöffnung 3 zur Hälfte geöffnet. Im Unterschied zu der in Ansicht A gezeigten Position kann in dieser Position nur die Hälfte des Luftmassenstromes durch die Lufteintrittsöffnung gelangen und zum Enteisen genutzt werden, da die Hälfte der Stirnfläche 15 des Stirnabschnitts 9 des Absperrorgans 6 die Lufteintrittsöffnung 3 verschließt.

Die andere Hälfte des erwärmten Luftmassenstromes gelangt in den Fußraum des Fahrzeugs. Die Stellung des Absperrorgans in dieser Position II wird daher als "Fußheizungs-Enteisungsmodus" bezeichnet.

Ansicht C zeigt das Absperrorgan 6 in einer Mittenposition III nach einem weiteren 45 Grad-Schwenk des Absperrorgans aus der Zwischenposition II. In der Mittenposition III ist die erste Luftaustrittsöffnung 4, die zweite Luftaustrittsöffnung 5 und die Lufteintrittsöffnung 3 geschlossen. Im Unterschied zu der in Ansicht B gezeigten Position kann in dieser Position kein Luftmassenstrom durch eine der Luftaustrittsöffnungen 4, 5 gelangen, da die gesamte Stirnfläche 15 des Absperrorgans 6 die Lufteintrittsöffnung 3 verschließt. Daher gelangt der gesamte Luftmassenstromes in dieser Position in den Fußraum des Fahrzeugs. Die Stellung des Absperrorgans 6 in dieser Position II wird daher als "Fußheizungsmodus" bezeichnet.

Ansicht D zeigt eine zweite Zwischenposition IV nach einem weiteren 45-Grad-Schwenk des Absperrorgans aus der Mittenposition III. In der Zwischenposition IV ist die zweite Luftaustrittsöffnung 5 geöffnet, die erste Luftaustrittsöffnung 4 geschlossen und die Lufteintrittsöffnung 3 zur Hälfte geöffnet. In der Position IV kann nur die Hälfte des Luftmassenstromes durch die Lufteintrittsöffnung 3 gelangen und für die Ventilation/Kühlung der Luft des Fahrzeuginnenraums genutzt werden, da die Hälfte der Stirnfläche 15 des Stirnabschnitts 9 des Absperrorgans 6 die Lufteintrittsöffnung 3 verschließt. Die andere Hälfte des Luftmassenstromes gelangt wie in der Ansicht B in den Fußraum des Fahrzeugs. Die Stellung des Absperrorgans in dieser Position II wird daher als "Fußheizung-Ventilationsmodus" bezeichnet.

In Endposition V, gezeigt in Ansicht E, wird die gesamte durch die Lufteintrittsöffnung 3 strömende gekühlte Luftmasse 13 über die Luftaustrittsöffnung 5 und einen hier nicht gezeigten Kanal zu einem ebenfalls nicht gezeigten Belüftungs- oder Ventilations-Auslass im Bereich einer Mittelkonsole des Fahrzeugs geleitet. Die Position kann daher als "Ventilationsmodus" bezeichnet werden. Eine plane Seitenfläche 16 eines Luftleitabschnitts 8 des Absperrorgans, die sich von der Schwenkachse 7 bis zu einem Stirnabschnitt 9 des Absperrorgans 6 erstreckt, wirkt in dieser Position mit einer Innenwandung 11 des Gehäuses derart zusammen, dass eine plane Luftleitfläche 17 gebildet ist. Durch die Luftleitfläche 17, insbesondere die Seitenfläche 16 des Absperrorgans 6 wird die zweite Luftaustrittsöffnung 4 geschlossen. Der relative Schwenkwinkel α beträgt in der zweiten Endposition V 135 Grad.

Ansicht F veranschaulicht schließlich drei Modi "Enteisung-volle Heizkraft" I, "Ventilation volle Kühlleistung" III und "Fußraum-volle Heizkraft" V.

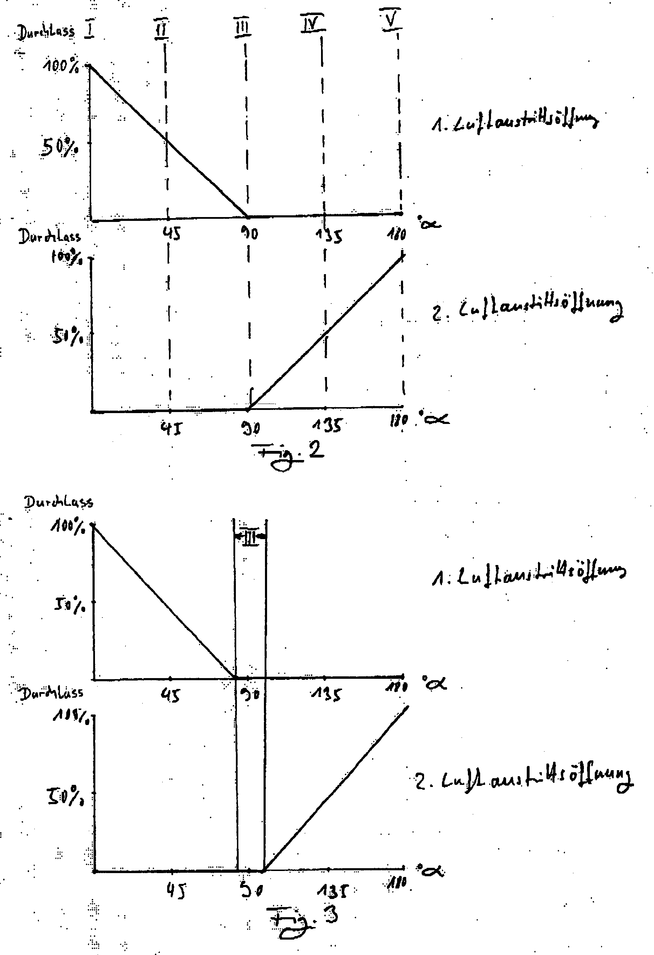

Entsprechend der Luftverteilvorrichtung aus Fig. 1 A - E zeigt Fig. 2 im oberen Diagramm den Durchlass in Prozent für die erste Luftaustrittsöffnung 4 und im unteren Diagramm den Durchlass in Prozent für die zweite Luftaustrittsöffnung 5 in Bezug zu den Schwenkwinkeln bei den in Fig. 1 gezeigten und beschriebenen Positionen I bis V. Es ist sofort ersichtlich, dass die volle Fußraumbeheizung in der Mittenposition III nur bei einem sehr kleinen Schwenkbereich des Absperrorgans erreicht wird.

Dieser Bereich lässt sich erweitern, wenn entweder das Absperrorgan, das in den gezeigten Ansichten mit seinen Seitenflächen einen Winkel von 90 Grad aufspannt, entsprechend vergrößert ist, oder die Kontaktfläche der Innenwandung und der Stirnfläche des Absperrorgans vergrößert ist.

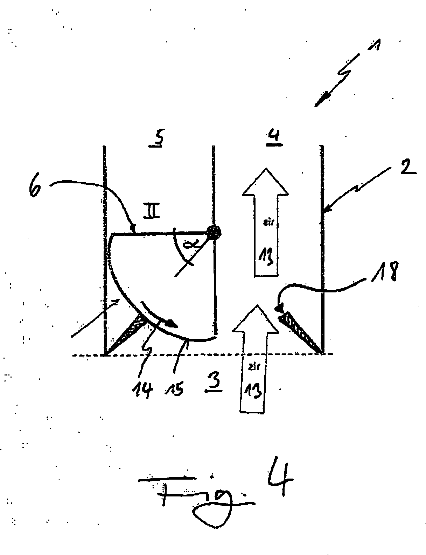

Die Figur 3 veranschaulicht den Luftdurchlass in verschiedenen Positionen I bis V wenn eine Luftverteilvorrichtung nach Figur 4 verwendet ist. Im Unterschied zu dem in Fig. 1 gezeigten Gehäuse sind die beiden Innenwandungen mit einem -im Vergleich zu den in Figur 1 gezeigten Ansichten- relativ breiten Bund 18 ausgestattet, der sich der Innenwandung des Gehäuses anschließt und während verschiedener Schwenkwinkel bündig mit der stirnfläche des Absperrorgans 6 in Kontakt ist. Entsprechend vergrößert ist der Bereich des Schwenkwinkels bei dem eine Luftverteilung entsprechend der oben erläuterten Mittenposition III (Fußheizungsmodus) erreicht wird.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### Bezugszeichenliste

- 1: Luftverteilvorrichtung
- 2: Gehäuse
- 3: Lufteintrittsöffnung
- 4: Luftaustrittsöffnung
- 5: Luftaustrittsöffnung
- 6: Absperrorgan
- 7: Schwenkachse
- 8: Luftleitabschnitt
- 9: Stirnabschnitt
- 10: Seitenfläche
- 11: Innenwandung
- 12: Luftleitfläche
- 13: Luftmassenstrom
- 14: Schwenkrichtug
- 15: Stirnfläche
- 16: Seitenfläche
- 17: Luftleitfläche
- 18: Bund
- I: Endposition
- II: Zwischenposition
- III: Mittenposition
- IV: Zwischenposition
- V: Endposition
- α: Schwenkwinkel

## Patentansprüche

1. Luftverteilvorrichtung (1) geeignet zur Luftverteilung in einem Fahrzeuginnenraum, aufweisend ein Gehäuse (2) mit einer Lufteintrittsöffnung (3), einer ersten Luftaustrittsöffnungen (4) und einer zweiten Luftaustrittsöffnung (5) und ein einziges Absperrorgan (6) das innerhalb des Gehäuses (2) angeordnet ist, wobei das Absperrorgan zwischen zwei Endpositionen (I, V) um eine Schwenkachse (7) relativ zu dem Gehäuse (2) derart verschwenkbar ist, dass
- in der ersten Endposition (I) die erste Luftaustrittsöffnung (4) geöffnet, die zweite Luftaustrittsöffnung (5) geschlossen und die Lufteintrittsöffnung (3) vollständig geöffnet ist,
- in einer ersten Zwischenposition (II) die erste Luftaustrittsöffnung (4) geöffnet, die zweite Luftaustrittsöffnung (5) geschlossen und die Lufteintrittsöffnung (3) zur Hälfte geöffnet ist,
- in einer Mittenposition (III) die erste Luftaustrittsöffnung (4), die zweite Luftaustrittsöffnung (5) und die Lufteintrittsöffnung (3) geschlossen ist,
- in einer zweiten Zwischenposition (IV) die erste Luftaustrittsöffnung (4) geschlossen, die zweite Luftaustrittsöffnung (5) geöffnet und die Lufteintrittsöffnung (3) zur Hälfte geöffnet ist, und
- in der zweiten Endposition (V) die erste Luftaustrittsöffnung (4) geschlossen, die zweite Luftaustrittsöffnung (5) geöffnet und die Lufteintrittsöffnung (3) vollständig geöffnet ist.

2. Luftverteilvorrichtung (1) nach Anspruch 1, wobei die Luftaustrittsöffnungen (4, 5) mit ihren Querschnittsflächen in einer Längsachse (y) gestreckt und parallel zu der Schwenkachse (7) orientiert sind.

3. Luftverteilvorrichtung (1) nach Anspruch 1 oder 2, wobei das Absperrorgan (6) einen Stirnabschnitt (9) mit einer konvexe Stirnfläche (15) aufweist, die parallel zu der Schwenkachse (7) angeordnet ist.

4. Luftverteilvorrichtung (1) nach Anspruch 3, wobei die konvexe Oberfläche kreisbogenförmig und mit einem Radius von die Schwenkachse (7) beabstandet ist.

5. Luftverteilvorrichtung (1) nach Anspruch 2 oder 3, wobei zwischen dem Stimabschnitt (9) und der Schwenkachse (7) zwei Luftleitabschnitte (8) mit ebenen oder konkaven Seitenflächen (10) erstrecken.

6. Luftverteilvorrichtung (1) nach einem der Ansprüche 1 bis 5, wobei die Lufteintrittsöffnung (3) von einem sich zu der dem Gehäuseinneren verjüngenden Gehäuseabschnitt gebildet ist.

7. Luftverteilvorrichtung (1) nach Anspruch 6, wobei in jeder Endpositionen (I, V) eine Innenwandung (11) des verjüngenden Gehäuseabschrtittes eine ebene oder konkave Luftleitfläche (12) mit einem der Luftleitabschnitte (8) des Absperrorgans (6) ausbilden.

8. Luftverteilvorrichtung (1) nach Anspruch 7, wobei eine Innenkante der Innenwandung (11) in jeder Verschwenkungsposition zwischen den Endpositionen (I, V) mit der Stirnfläche (15) des Absperrorgans (6) in flächigem Kontakt ist.

9. Luftverteilvorrichtung (1) nach Anspruch 7, wobei die Innenwandung (11) einen Bund (18) aufweist, der mit einer Oberseite an die Fläche der Stirnseite (15) des Absperrorgans (6) bündig angepasst ist und in jeder Verschwenkungsposition (II, III, IV) zwischen den Endpositionen (I, V) mit der Stirnfläche (15) des Absperrorgans (6) in flächigem Kontakt ist.

10. Luftverteilvorrichtung (15) nach Anspruch 5, wobei die Ebenen der Seitenflächen (10) einen Winkel von 45 bis 135 Grad, bevorzugt von 90 Grad um die Schwenkachse (7) aufspannen.

11. Luftverteitvorrichtung (1) nach einem der Ansprüche 1 bis 10, wobei das Absperrorgan (um einen Winkel von 90 bis 270 Grad, bevorzugt von 180 Grad um die Schwenkachse (7) verschwenkbar ist.

12. Luftverteilvorrichtung (1) nach einem der Ansprüche 1 bis 11, wobei das Gehäuse (2) und/ oder des Absperrorgan (6) wenigstens zu einem Teil aus thermoplastischem, insbesondere elastomerem Material stranggepresst ist.

13. Luftverteilvorrichtung (1) nach einem der Ansprüche 1 bis 12, wobei das Absperrorgan (6) mittels eines Motors, eines Stellgliedes oder eines Hebels verstellbar ist.

14. Fahrzeug, aufweisend eine Luftverteilvorrichtung (1) nach einem der Ansprüche 1 bis 13, ein Enteisungsluft-Auslassgitter und einem Belüftungsauslassgitter, wobei die Luftverteilvorrichtung (1) unterhalb des Enteisungsluft-Auslassgitter und einem Belüftungsauslassgitter angeordnet und mit seiner Längsachse parallel zu der Fahrzeugquerrichtung (Y-Richtung) orientiert ist.

15. Fahrzeug nach Anspruch 14, wobei die erste Luftaustrittsöffnung (4) mit ihrer Querschnittsfläche an die Querschnittsfläche des Enteisungsluft-Auslassgitters und die zweite Luftaustrittsöffnung (5) mit ihrer Querschnittsfläche an die Querschnittsfläche des Belüftungs-Auslassgitters angepasst ist.

## Claims

1. An air distributing device (1) suitable for distributing air in a vehicle interior, comprising a housing (2) having an air inlet opening (3), a first air outlet opening (4) and a second air outlet opening (5) and a single shut-off element (6), which is arranged inside the housing (2), wherein the shut-off element can be pivoted about a pivot axis (7) relative to the housing (2) between two end positions (I, V) such that
- in the first end position (I), the first air outlet opening (4) is open, the second air outlet opening (5) is closed and the air inlet opening (3) is completely open;
- in a first intermediate position (II), the first air outlet opening (4) is open, the second air outlet opening (5) is closed and the air inlet opening (3) is half open;
- in a central position (III), the first outlet opening (4), the second air outlet opening (5) and the air inlet opening (3) are closed;
- in a second intermediate position (IV), the first outlet opening (4) is closet, the second air outlet opening (5) is open and the air inlet opening (3) is half open; and
- in the second end position (V), the first air outlet opening (4) is closed, the second air outlet opening (5) is open and the air inlet opening (3) is completely open.

2. The air distributing device (1) according to claim 1, wherein the cross-sectional surfaces of the air outlet openings (4, 5) are extended in a longitudinal axis (y) and oriented parallel to the pivot axis (7).

3. The air distributing device (1) according to claim 1 or 2, wherein the shut-off element (6) comprises an end section (9) having a convex end face (15), which is arranged parallel to the pivot axis (7).

4. The air distributing device (1) according to claim 3, wherein the convex surfaces is circular arc-shaped and spaced at a radius from the pivot axis (7).

5. The air distributing device (1) according to claim 2 or 3, wherein two air guide sections (8) comprising flat or concave lateral faces (10) extend between the end section (9) and the pivot axis (7).

6. An air distributing device (1) according to any one of claims 1 to 5, wherein the air inlet opining (3) is formed by a housing section that is tapered toward the housing interior.

7. The air distributing device (1) according to claim 6, wherein, in each end position (I, V), an inside wall (11) of the tapering housing section forms a flat or concave air guide surface (12) together with one of the air guide sections (8) of the shut-off element (6).

8. The air distributing device (1) according to claim 7, wherein, in each pivot positions between the end positions (I, V), an inside edge of the inside wall (11) is in planar contact with the end face (15) of the shut-off element (6).

9. The air distributing device (1) according to claim 7, wherein the inside wall (11) comprises a collar (18), an upper face of which is adapted flush to the surface of the end face (15) of the shut-off valve (6) and which, in each pivot position (II, III, IV) between the end positions (I, V), is in planar contact with the end face (15) of the shut-off element (6).

10. The air distributing device (15) according to claim 5, wherein the planes of the lateral faces (10) span an angle of 45 to 135 degrees, preferably of 90 degrees, about the pivot axis (7).

11. An air distributing device (1) according to any one of claims 1 to 10, wherein the shut-off element can be pivoted about the pivot axis (7) by an angle of 90 to 270 degrees, preferably of 180 degrees.

12. An air distributing device (1) according to any one of claims 1 to 11, wherein at least a part of the housing (2) and/or of the shut-off element (6) is extruded from a thermoplastic, and in particular an elastomeric, material.

13. An air distributing device (1) according to any one of claims 1 to 12, wherein the shut-off element (6) can be adjusted by way of a motor, an actuating member or a lever.

14. A vehicle, comprising an air distributing device (1) according to any one of claims 1 to 13, a defrosting air outlet register and a ventilation outlet register, wherein the air distributing device (1) is arranged beneath the defrosting air outlet register and a ventilation outlet register and the longitudinal axis thereof is oriented parallel to the vehicle transverse direction (Y direction).

15. The vehicle according to claim 14, wherein the cross-sectional surface of the first air outlet opening (4) is adapted to the cross-sectional surface of the defrosting air outlet register and the cross-sectional surface of the second air outlet opening (5) is adapted to the cross-sectional surfaces of the ventilation outlet register.

## Revendications

1. Dispositif répartiteur d'air (1) approprié pour la répartition d'air dans l'habitacle d'un véhicule, présentant une boîtier (2) comprenant une ouverture d'entrée d'air (3), une première ouverture de sortie d'air (4) et une deuxième ouverture de sortie d'air (5) est un unique clapet de fermeture (6) qui est disposé à l'intérieur du boîtier (2), où le clapet de fermeture peut pivoter, entre deux positions de fin de course (I, V), autour d'un axe de pivotement (7), par rapport au boîtier (2), de manière telle que
- dans la première position de fin de course (I), la première ouverture de sortie d'air (4) soit ouverte, la deuxième ouverture de sortie d'air (5) soit fermée est l'ouverture d'entrée d'air (3) soit complètement ouverte,
- dans une première position intermédiaire (II), la première ouverture de sortie d'air (4) soit ouverte, la deuxième ouverture de sortie d'air (5) soit fermée et l'ouverture d'entrée d'air (3) soit ouverte à moitié,
- dans une position au centre (III), la première ouverture de sortie d'air (4), la deuxième ouverture de sortie d'air (5) et l'ouverture d'entrée d'air (3) soient fermées,
- dans une deuxième position intermédiaire (IV), la première ouverture de sortie d'air (4) soit fermée, la deuxième ouverture de sortie d'air (5) soit ouvert et l'ouverture d'entrée d'air (3) soit ouverte à moitié, et
- dans la deuxième position de fin de course (V), la première ouverture de sortie d'air (4) soit fermée, la deuxième ouverture de sortie d'air (5) soit ouverte et l'ouverture d'entrée d'air (3) soit complètement couverte.

2. Dispositif répartiteur d'air (1) selon la revendication 1, où les ouvertures de sortie d'air (4, 5), par leurs surfaces en section, sont étirées suivant un axe longitudinal (y) et orientées parallèlement à l'axe de pivotement (7).

3. Dispositif répartiteur d'air (1) selon la revendication 1 ou 2, où le clapet de fermeture (6) présente une partie frontale (9) comportant une surface frontale convexe (15) qui est disposée parallèlement à l'axe de pivotement (7).

4. Dispositif répartiteur d'air (1) selon la revendication 3, où la surface convexe est en forme d'arc de cercle et espacée de l'axe de pivotement (7), par un rayon.

5. Dispositif répartiteur d'air (1) selon la revendication 2 ou 3, où deux tronçons déflecteurs d'air (8) comportant des surfaces latérales planes ou concaves (10) s'étendent entre la partie frontale (9) et l'axe de pivotement (7).

6. Dispositif répartiteur d'air (1) selon l'une quelconque des revendications 1 à 5, où l'ouverture d'entrée d'air (3) est fermée par une partie de boîtier se rétrécissant par rapport à l'ouverture tournée vers l'intérieur du boîtier.

7. Dispositif répartiteur d'air (1) selon la revendication 6, où, dans chacune des positions de fin de course (I, V), une paroi intérieure (11) de la partie de boîtier se rétrécissant forme une surface déflectrice d'air plane ou concave (12) comportant l'un des tronçons déflecteurs d'air (8) du clapet de fermeture (6).

8. Dispositif répartiteur d'air (1) selon la revendication 7, où un bord intérieur de la paroi intérieure (11), dans chaque position de pivotement entre les positions de fin de course (I, V), est en contact à plat avec la surface frontale (15) du clapet de fermeture (6).

9. Dispositif répartiteur d'air (1) selon la revendication 7, où la paroi intérieure (11) présente une épaulement (18) qui, par un côté supérieur, est adapté, en étant affleurant, à la surface du côté frontal (15) du clapet de fermeture (6) et, dans chaque position de pivotement (II, III, IV) entre les positions de fin de course (I, V), est en contact à plat avec la surface frontale (15) du clapet de fermeture (6).

10. Dispositif répartiteur d'air (15) selon la revendication 5, où les plans des surfaces latérales (10) s'étendent suivant un angle de 45 degrés à 135 degrés, de préférence de 90 degrés, autour de l'axe de pivotement (7).

11. Dispositif répartiteur d'air (1) selon l'une quelconque des revendication 1 à 10, ou le clapet de fermeture peut pivoter autour de l'axe de pivotement (7), suivant un angle de 90 degrés à 270 degrés, de préférence de 180 degrés.

12. Dispositif répartiteur d'air (1) selon l'une quelconque des revendications 1 à 11, où le boîtier (2) et / ou le clapet de fermeture (6) est extrudé, au moins pour une partie, à partir d'un matériau thermoplastique, en particulier d'un matériau élastomère.

13. Dispositif répartiteur d'air (1) selon l'une quelconque des revendications 1 à 12, où le clapet de fermeture (6) est réglable au moyen d'un moteur, d'un actionneur ou d'un levier.

14. Véhicule présentant un dispositif répartiteur d'air (1) selon l'une quelconque des revendications 1 à 13, une grille de sortie d'air de dégivrage et une grille de sortie de ventilation, où le dispositif répartiteur d'air (1) est disposé au-dessous de la grille de sortie d'air de dégivrage et d'une grille de sortie de ventilation, et est orienté, par son axe longitudinal, parallèlement à la direction transversale du véhicule (direction Y).

15. Véhicule selon la revendication 14, où la première ouverture de sortie d'air (4), par sa surface en section, est adaptée à la surface en section de la grille de sortie d'air de dégivrage, et la deuxième ouverture de sortie d'air (5), par sa surface en section, est adaptée à la surface en section de la grille de sortie de ventilation.
